# EUROPÄISCHE PATENTSCHRIFT

(11) **EP 0 648 626 B1**
(45) Veröffentlichungstag und Bekanntmachung des Hinweises auf die Patenterteilung: **12.03.1997**
(21) Anmeldenummer: 94114193.9
(22) Anmeldetag: 09.09.1994
(51) Int. Cl.: B60H 1/00, F24F 13/14

(54) **Kopplungseinrichtung für eine Klappenanordnung**
Coupling device for vane arrangement
Dispositif de couplage pour un agencement des ailettes

(30) Priorität: 13.10.1993 DE 4334862
(43) Veröffentlichungstag der Anmeldung: 19.04.1995
(73) Patentinhaber: Behr GmbH & Co., D-70469 Stuttgart (DE)
(72) Erfinder: Schenk, Frank-Heiner Dipl.-Ing., D-70469 Stuttgart (DE)
(74) Vertreter: Dreiss, Fuhlendorf & Steimle Patentanwälte

(56) Entgegenhaltungen:
- EP-A- 0 551 882
- US-A- 4 796 518
- PATENT ABSTRACTS OF JAPAN vol. 13, no. 512 (M-893) (3860) 16. November 1989 & JP-A-01 204 815 (NIPPON DENSO) 17. August 1989
- PATENT ABSTRACTS OF JAPAN vol. 10, no. 55 (M-458) (2112) 5. März 1986 & JP-A-60 203 522 (NISSAN JIDOSHA) 15. Oktober 1985

## Beschreibung

Die Erfindung betrifft eine Kopplungseinrichtung für eine Klappenordnung, die zwei Klappenelemente aufweist, deren Schwenkachsen im wesentlichen orthogonal zueinander angeordnet sind, wobei durch die Kopplungseinrichtung eine Schwenkbewegung des ersten Klappenelements in eine Schwenkbewegung des zweiten Klappenelements der Klappenanordnung umsetzbar ist, indem ein Steuerbolzen eines mit dem ersten Klappenelement verbundenen ersten Betätigungselements der Kopplungseinrichtung in eine Steuerkurve eines mit dem zweiten Klappenelement verbundenen zweiten Betätigungselements der Kopplungseinrichtung eingreift.

Eine derartige Kopplungseinrichtung ist bekannt. Hierbei ist vorgesehen, daß der in der am zweiten Klappenelement angeordneten Steuerkurve des zweiten Betätigungselements eingreifende Steuerbolzen des ersten Betätigungselements konisch ausgeführt ist, um eine möglichst spielfreie Koppelung der beiden Klappenelemente zu erhalten. Dieses Ausführungsprinzip besitzt jedoch den Nachteil, daß hierbei eine axial sehr eng tolerierte und in Achsrichtung sehr verwindungssteife Auslegung des Steuerbolzens der Kopplungseinrichtung erforderlich ist, um ein Verklemmen des konischen Bolzens durch ein zu tiefes Eintauchen in die Steuerkurve des zweiten Betätigungselements der Kopplungseinrichtung zu verhindern. Eine derartige erforderliche Ausbildung des Steuerbolzens des ersten Betätigungselements der Kopplungseinrichtung sowie der korrespondierenden Steuerkurve des zweiten Betätigungselements bringt in nachteiliger Art und Weise aufgrund der dabei einzuhaltenden Toleranz einen hohen fertigungstechnischen Aufwand mit sich, welcher sich nachteiligerweise in erhöhten Produktionskosten niederschlägt.

Außerdem ist in nachteiliger Art und Weise selbst bei einer obigen Anforderung genugenden Ausbildung der Kopplungseinrichtung nicht gewährleistet, daß eine diese Kopplungseinrichtung aufweisende Klappenanordnung zufriedenstellend funktioniert. Durch die herstellungsbedingten Toleranzen der Gehäuseteile, in denen die Klappenelemente der Klappenanordnung gelagert sind, sowie durch Toleranzen der Klappenelemente selbst kann eine nachteilige Verschiebung des konischen Steuerbolzens des ersten Betätigungselements in axialer Richtung auftreten, die entweder in einem zu großen Spiel oder sogar in einem Verklemmen des konischen Steuerbolzens in seiner zugeordneten Steuerkurve resultieren kann. In nachteiliger Art und Weise kann dies zu einer Verminderung der Funktionsfähigkeit der Klappenanordnung oder - insbesondere im letztgenannten Fall - zu einem Blockieren der Klappenelemente der Klappenanordnung führen.

Es ist daher Aufgabe der Erfindung, eine Kopplungseinrichtung der eingangs genannten Art derart weiterzubilden, daß in besonders einfacher Art und Weise ein möglichst spielfreier Eingriff des Bolzens in seiner zugeordneten Führungsbahn gewährleistet ist.

Die Aufgabe wird erfindungsgemäß dadurch gelöst, daß der Steuerbolzen des ersten Betätigungselement wenigstens über seinen während der Schwenkbewegung mit der Steuerkurve des zweiten Betätigungselements in Eingriff stehenden Längsbereich einen im wesentlichen elliptischen und über diesen Längsbereich konstanten Querschnitt aufweist.

Durch die erfindungsgemäße Ausbildung des Steuerbolzen des ersten Betätigungselements mit einem in Achsrichtung konstanten, elliptischen Querschnitt wird in vorteilhafter Art und Weise erreicht, daß eine nur aufwendig zu realisierende exakte Axialfixierung desselben nicht mehr notwendig ist. Dies besitzt den Vorteil, daß eine grobe Tolerierung der Axiallagerung der Klappenelemente bzw. der Betätigungselemente der Kopplungseinrichtung sowie eine kraftbedingte Verformung des erfindungsgemäßen Steuerbolzens der erfindungsgemäßen Kopplungseinrichtung in besonders vorteilhafter Art und Weise nicht zu einem Verklemmen der Klappenanordnung führen kann. Der im Übertragungsbereich des Bolzens konstante Querschnitt bewirkt, daß es bei einer mit der erfindungsgemäßen Kopplungseinrichtung ausgestatteten Klappenanordnung nunmehr in vorteilhafter Art und Weise vollkommen unerheblich ist, wie weit der elliptische Bolzen des ersten Betätigungselements in die Führungskurve des zweiten Betätigungselements eintaucht, so daß die komplexe räumliche Bewegung von Führungskurve und Steuerbolzen leichter beherrschbar wird. Durch die elliptische Ausführung des Steuerbolzen des ersten Betätigungselements wird außerdem in vorteilhafter Art und Weise einer Vergrößerung des Spiels zwischen dem Steuerbolzen und der Steuerkurve - wie sie bei den bekannten Konstruktionen in der Mittelstellung der Schwenkbewegung der Klappenelemente oft auftritt - entgegengewirkt.

Vorteilhafte Weiterbildungen der Erfindung ergeben sich aus den Unteransprüchen.

Weitere Einzelheiten der Erfindung sind dem Ausführungsbeispiel zu entnehmen, das im folgenden anhand der Figuren beschrieben wird. Es zeigen:
- **Figur 1**: ein Ausführungsbeispiel einer Klappenanordnung;
- **Figuren 2a-2c und Figuren 3a-3c**: eine schematische Darstellung des Schwenkvorgangs der Klappenanordnung.

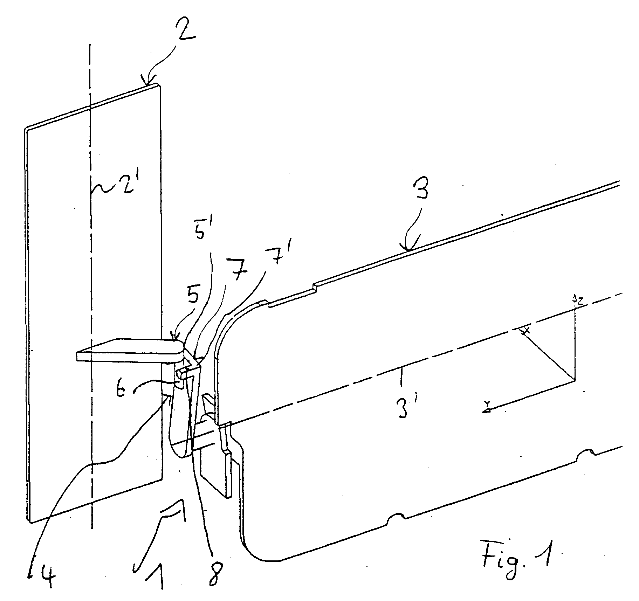

In Figur 1 ist schematisch eine allgemein mit 1 bezeichnete Klappenanordnung, insbesondere für Belüftungs- oder Klimaanlagen im Automobilbereich, dargestellt, welche zwei Klappenelemente 2 und 3 und eine diese beiden Klappenelemente 2 und 3 verbindende Kopplungseinrichtung 4 aufweist. Das erste Klappenelement 2 ist um eine durch die strichlierte Linie angedeutete Schwenkachse 2' schwenkbar und in bekannter Art und Weise in einem in den Figuren nicht dargestellten Gehäuse der Klappenanordnung 1 gelagert. Das ebenfalls in diesem Gehäuse gelagerte zweite Klappenelement 3 ist in entsprechender Art und Weise um die durch die weitere strichlierte Linie repräsentierte zweite Schwenkachse 3' schwenkbar. Eine derartige Klappenanordnung mit den im wesentlichen orthogonal zueinander verlaufenden Schwenkachsen 2', 3' der Klappenelemente 2, 3 ist an und für sich bekannt und muß daher nicht näher beschrieben werden.

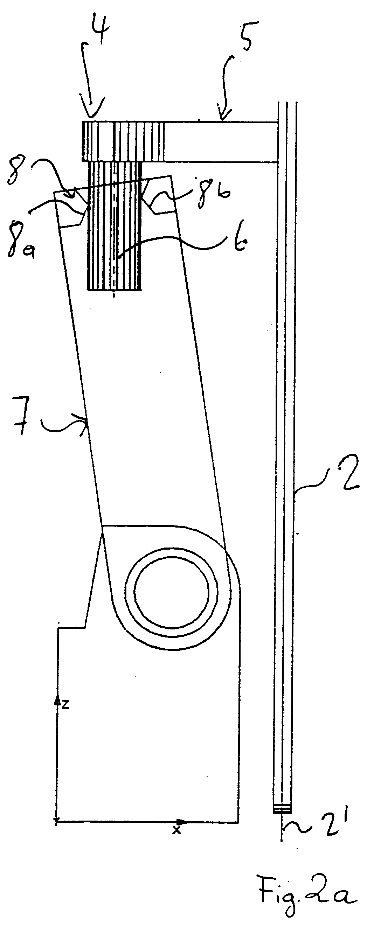

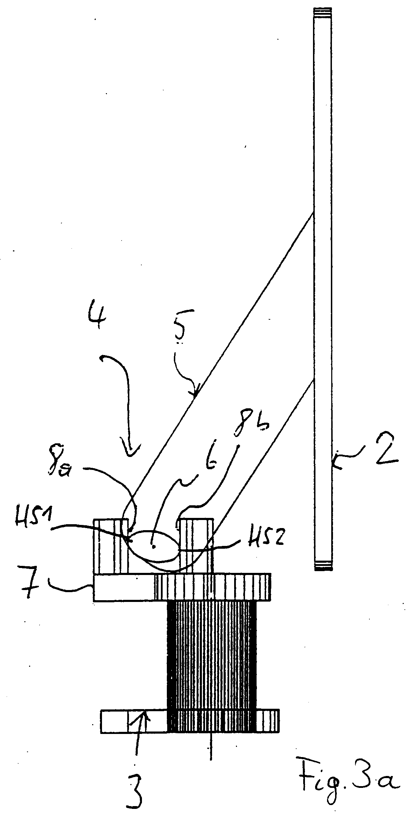

Die Kopplungseinrichtung 4 dient dazu, eine Schwenkbewegung des um die erste Schwenkachse 2' beweglichen ersten Klappenelements 2 um einen definierten ersten Schwenkwinkel in eine entsprechende Schwenkbewegung des um die zweite Schwenkachse 3' beweglichen zweiten Klappenelements 3 der Klappenanordnung 1 umzusetzen. Hierzu ist in an und für sich bekannte Art und Weise vorgesehen, daß die Kopplungseinrichtung 4 ein fest mit dem ersten Klappenelement 2 verbundenes, als Hebel fungierendes erstes Betätigungselement 5 aufweist, daß an seinem dem ersten Klappenelement 2 gegenüberliegenden freien Ende 5 einen vorzugsweise in Richtung der ersten Schwenkachse 2' verlaufenden, vorzugsweise integral mit dem ersten Betätigungselement 5 ausgebildeten Steuerbolzen 6 aufweist. Das erste Betätigungselement 5 der Kopplungseinrichtung 1 wirkt mit einem fest mit dem zweiten Klappenelement 3 verbundenen, hebelartigen zweiten Betätigungselement 7 zusammen, das an seinem freien Ende 7' eine Steuerkurve 8 mit zwei Führungsbahnen 8a und 8b (s. Fig. 2a-2c, 3a-3c) für den Steuerbolzen 6 aufweist, welche ebenfalls vorzugsweise als integraler Bestandteil des zweiten Betätigungselements 7 ausgebildet ist.

Wichtig ist nun, daß bei dem beschriebenen Ausführungsbeispiel der Steuerbolzen 6 einen elliptischen Querschnitt aufweist, welcher vorzugsweise über den gesamten Längsbereich des Steuerbolzens 6 konstant ist. Es ist aber durchaus ausreichend, daß der Steuerbolzen 6 des ersten Betätigungselements 5 lediglich über seinen Übertragungsbereich, also über denjenigen Längsbereich, der bei einer Schwenkbewegung der Klappenelemente 2, 3 von ihrer Anfangslage in ihre Endlage mit den Führungsbahnen 8a und 8b der Steuerkurve 8 in Eingriff tritt, konstant ist. Der in Achsrichtung des Steuerbolzens 6 konstante Querschnitt bewirkt vorteilhafterweise, daß bei der Axialfixierung desselben es nicht mehr notwendig ist, äußerst enge Toleranzen einzuhalten, um eine einwandfreie Funktion der Kopplungseinrichtung 4 gewährleisten. Bei dem beschriebenen Steuerbolzen 6 mit seinem zumindest über den Übertragungsbereich konstanten, elliptischen Querschnitt spielt in vorteilhafter Art und Weise die Eintauchtiefe des elliptischen Steuerbolzens 6 des ersten Betätigungselements 5 in die Steuerkurve 8 des zweiten Betätigungselements 7 nun nicht mehr eine derart kritische Rolle wie bei einem bisher verwendeten konisch geformten Bolzen. Außerdem ist von Vorteil, daß auch eine kraftbedingte Verformung des Steuerbolzens 6 nicht zu einer Verklemmung der Kopplungseinrichtung 4 und somit zu einer Funktionsunfähigkeit der Klappenanordnung 1 führen kann.

Es ist zwar grundsätzlich auch denkbar, den elliptischen Steuerbolzen 6 in zylindrischer Form auszuführen. Diese Ausgestaltung besitzt jedoch den Nachteil, daß in der Mittelstellung der Schwenkbewegung der Klappenelemente 2 und 3 von ihrer Ausgangs- in ihre Endstellung ein unerwünschtes Spiel zwischen dem Steuerbolzen 6 und den Führungsbahnen 8a, 8b der Steuerkurve 8 des zweiten Betätigungselements 7 der Kopplungseinrichtung 4 auftritt. Dies wird durch die elliptische Ausgestaltung des Bolzens 6 vermieden, durch die gewährleistet ist, daß der Steuerbolzen 6 des ersten Betätigungselements 5 stets in entsprechendem Wirkeingriff mit den Führungsbahnen 8a, 8b der Steuerkurve 8 steht.

Die Funktionsweise der beschriebenen Kopplungseinrichtung 4 wird nun anhand der Figuren 2a-2c und 3a-3c schematisch dargestellten Schwenkbewegung zur Klappenanordnung 1 erläutert. Die Figuren 2a und 3a zeigen in einer Seitenansicht bzw. in einer Draufsicht auf die Anordnung der Figur 1 die Klappenanordnung in ihrer Anfangsstellung. Der elliptische Steuerbolzen 6 setzt hierbei in seinem oberen Bereich an den beiden Führungsbahnen 8a, 8b der Steuerkurve 8 an, wobei er - wie am besten aus Figur 3a ersichtlich ist - nicht mit den Hauptscheiteln HS1 und HS2 des elliptischen Querschnitts an den Führungsflächen 8a, 8b der Steuerkurve 8 auftritt, sondern setzt seitlich versetzt auf diese auf.

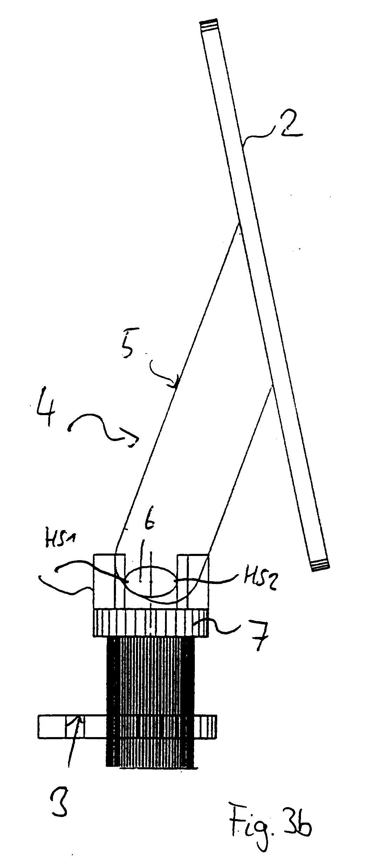

Wird nun das erste Klappenelement 2 aus seiner Anfangsstellung in die in den Figuren 1, 2b und 3b dargestellte Mittelstellung und dadurch das zweite Klappenelement aus seiner Anfangsstellung in die Mittelstellung seiner Schwenkbewegung bewegt, so gleitet der elliptische Steuerbolzen 6 entlang der Führungsbahnen 8a, 8b. Wie am besten aus Figur 3b ersichtlich ist, setzt der elliptische Steuerbolzen 6 in der Mittelstellung der Schwenkbewegung mit den Hauptscheiteln HS1 und HS2 des elliptischen Querschnitts an den Führungsbahnen 8a, 8b der Steuerkurve 8 an, so daß die Hauptachsen der Querschnitts-Ellipse im wesentlichen orthogonal zu den Führungsbahnen 8a, 8b verlaufen.

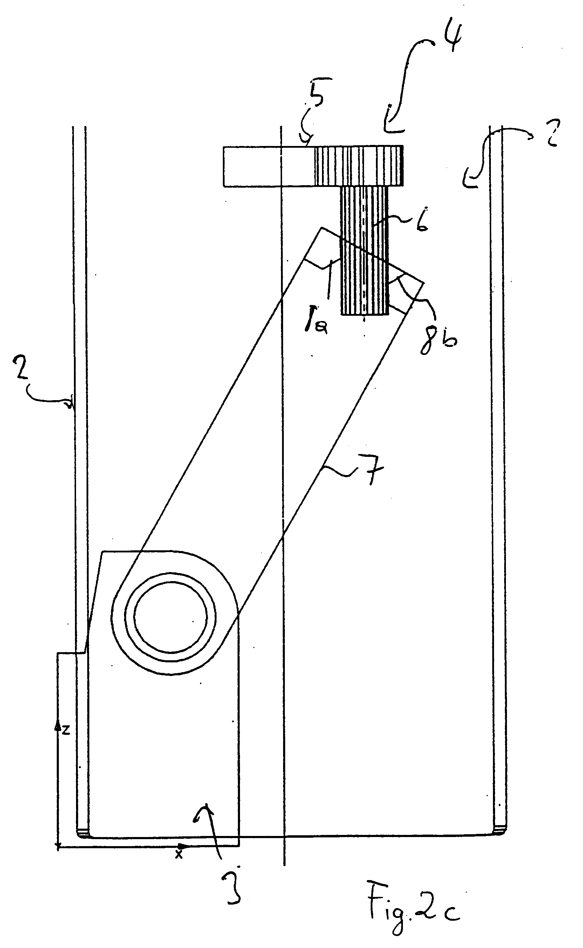

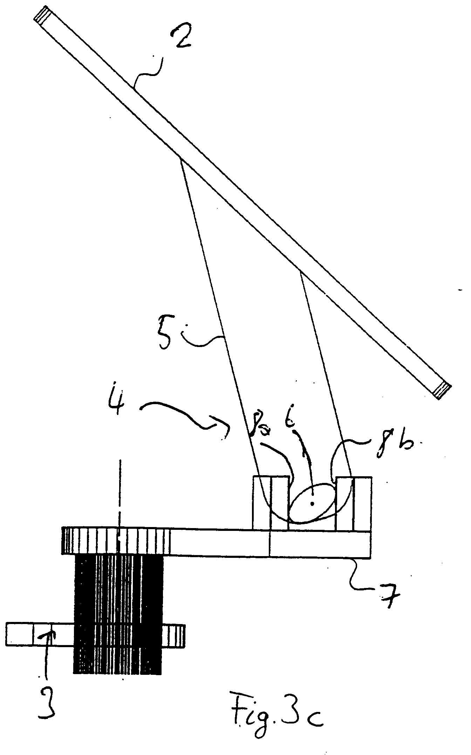

Durch eine weitere Verschwenkung des ersten Klappenelements 2 gelangen die beiden Klappenelemente 2, 3 der Klappenanordnung 1 in die in den Figuren 2c und 3c dargestellte Endstellung. In dieser setzt der Steuerbolzen 6 wiederum in seitlich neben den Hauptscheiteln HS1 und HS2 liegenden Bereichen an den Führungsbahnen 8a, 8b der Steuerkurve 8 des zweiten Betätigungselements 7 der Kopplungseinrichtung 4 an.

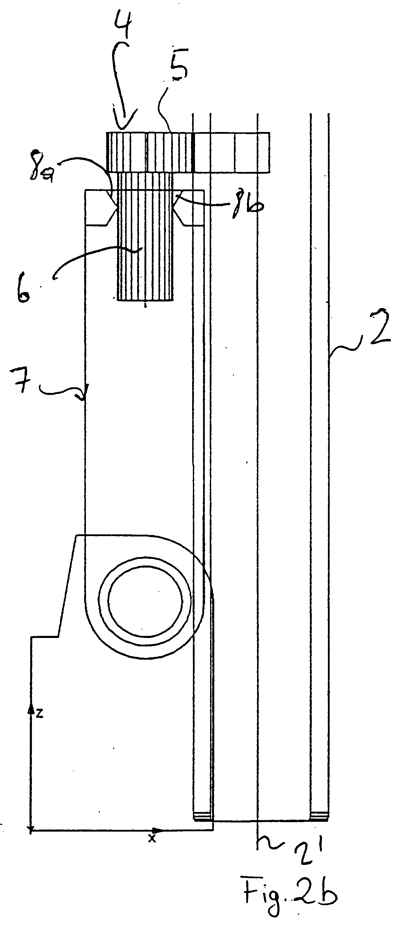

Aus dem beschriebenden Funktionsablauf ergibt sich nun ohne weiteres die Dimensionierung des elliptischen Querschnitts des Steuerbolzens 6 sowie seine Anordnung auf dem ersten Betätigungselement 5 der Kopplungseinrichtung 4 in Abhängigkeit von der Ausgestaltung der den zweiten Schwenkwinkel festlegenden Ausbildung der Führungsbahnen 8a, 8b der Steuerkurve 8. Die Hauptachsen der Ellipse sind dabei derart bemessen, daß sie in Summe - wie am besten aus Figur 2b ersichtlich ist - in einer Mittelstellung der Schwenkbewegung der Klappenelemente 2, 3 gleich dem kleinsten Abstand zwischen den beiden Führungsflächen 8a, 8b der Steuerkurve 8 sind. Die Dimensionierung der Nebenachsen des Ellipsenquerschnitts des Steuerbolzens 6 sowie seine Anordnung auf dem ersten Betätigungselement 5 der Kopplungseinrichtung 4 ergibt sich dann aus den Erfordernissen, daß in der Anfangs- und in der Endstellung die Klappenelemente 2, 3 die Querschnitts-Ellipse des Steuerbolzens 6 an den Führungsflächen 8a, 8b der Steuerkurve 8 anliegt.

## Patentansprüche

1. Kopplungseinrichtung für eine Klappenordnung, die zwei Klappenelemente (2, 3) aufweist, deren Schwenkachsen (2', 3') im wesentlichen orthogonal zueinander angeordnet sind, wobei durch die Kopplungseinrichtung (4) eine Schwenkbewegung des ersten Klappenelements (2) in eine Schwenkbewegung des zweiten Klappenelements (3) der Klappenanordnung (1) umsetzbar ist, indem ein Steuerbolzen (6) eines mit dem ersten Klappenelement (2) verbundenen ersten Betätigungselements (5) der Kopplungseinrichtung (4) in eine Steuerkurve (8) eines mit dem zweiten Klappenelement (3) verbundenen zweiten Betätigungselements (7) der Kopplungseinrichtung (4) eingreift, **dadurch gekennzeichnet,** das der Steuerbolzen (6) des ersten Betätigungselements (5) der Kopplungseinrichtung (4) wenigstens über seinen mit der Steuerkurve (8) des zweiten Betätigungselements (7) während der Schwenkbewegung in Eingriff stehenden Längsbereich einen im wesentlichen elliptischen und über diesen Längsbereich konstanten Querschnitt aufweist.

2. Kopplungseinrichtung für die Klappenanordnung nach Anspruch 1, dadurch gekennzeichnet, daß die Hauptachse der Querschnitts-Ellipse des Steuerbolzen (6) gleich dem halben Minimialabstand zwischen zwei gegenüberliegenden Führungsflächen (8a, 8b) der Steuerkurve (8) des zweiten Betätigungselements (7) der Kopplungseinrichtung (4) ist.

3. Kopplungseinrichtung nach Anspruch 1 oder 2, dadurch gekennzeichnet, daß in einer Mittelstellung der Schwenkbewegung des zweiten Klappenelements (3) die Hauptachse des elliptischen Querschnitts des Steuerbolzens (6) des ersten Betätigungselements (5) der Kopplungseinrichtung (4) orthogonal auf die Führungsbahnen (8a, 8b) der Steuerkurve (8) des zweiten Betätigungselements (7) steht.

4. Kopplungseinrichtung nach Anspruch 3, dadurch gekennzeichnet, daß in der Mittelstellung der Schwenkbewegung des zweiten Klappenelements (3) die Querschnitts-Ellipse des Steuerbolzens (6) im wesentlichen nur mit ihren Hauptscheiteln (HS1, HS2) mit den Führungsbahnen (8a, 8b) der Steuerkurve (8) des zweiten Betätigungselements (7) der Kopplungseinrichtung (4) in Eingritt steht.

5. Kopplungseinrichtung nach Anspruch 1 oder 2, dadurch gekennzeichnet, daß die Nebenachsen der Querschnitts-Ellipse des Steuerbolzen (6) derart festgelegt sind, daß in der Anfangs- und der Endstellung der Klappenelemente (2, 3) der Klappenanordnung (1) der Steuerbolzen (6) des ersten Betätigungselements (5) mit den Führungsbahnen (8a, 8b) der Steuerkurve (8) des zweiten Betätigungselements (7) der Kopplungseinrichtung (4) in Eingriff steht.

6. Kopplungseinrichtung nach Anspruch 1, dadurch gekennzeichnet, daß der Steuerbolzen (6) einen integralen Bestandteil des ersten Betätigungselements (5) ausbildet.

7. Kopplungseinrichtung nach Anspruch 1, dadurch gekennzeichnet, daß die Steuerkurve (8) einen integralen Bestandteil des zweiten Betätigungselements (7) der Kopplungseinrichtung (4) ausbildet.

8. Kopplungseinrichtung nach Anspruch 1, dadurch gekennzeichnet, daß das hebelartig ausgebildete erste Betätigungselement (5) der Kopplungseinrichtung (4) fest mit dem ersten Klappenelement (2) der Klappenanordnung (1) verbunden ist.

9. Kopplungseinrichtung nach Anspruch 1, dadurch gekennzeichnet, daß das hebelartig ausgebildete zweite Betätigungselement (7) der Kopplungseinrichtung (4) fest mit dem zweiten Klappenelement (3) der Klappenanordnung (1) verbunden ist.

10. Klappenanordnung mit zwei wesentlich orthogonal zueinander angeordneten Klappenelementen (2, 3), gekennzeichnet durch die Verwendung einer Kopplungseinrichtung (4) nach mindestens einem der Ansprüche 1 bis 9.

11. Klappenanordnung nach Anspruch 10, gekennzeichnet durch ihre Verwendung in einer Belüftungs- oder Klimaanlage insbesondere eines Automobils.

## Claims

1. A coupling device for a flap arrangement which has two flap elements (2, 3) whose axes of rotation (2', 3') are positioned essentially orthogonally to one other, whereby a rotating movement of the first flap element (2) can be converted into a rotating movement of the second flap element (3) of the flap arrangement (1) by the coupling device (4) by means of the engagement of a controlling pin (6) on a first actuating element (5) of the coupling device (4) connected to the first flap element (2) in a control curve (8) on a second actuating element (7) of the coupling device (4) connected to the second flap element (3), **characterised in that** at least the longitudinal section of the control pin (6) on the first actuating element (5) of the coupling device (4) which engages with the control curve (8) on the second actuating element (7) during the rotating movement has an essentially elliptical cross section which is constant over this longitudinal section.

2. A coupling device for the flap arrangement in accordance with Claim 1, **characterised in that** the principal axis of the elliptical cross section of the control pin (6) is equal to half of the minimum distance between two opposite guide surfaces (8a, 8b) on the control curve (8) on the second actuating element (7) of the coupling device (4).

3. A coupling device in accordance with Claim 1 or 2, **characterised in that** in the middle of the rotating movement of the second flap element (3), the principal axis of the elliptical cross section of the control pin (6) on the first actuating element (5) of the coupling device (4) is positioned orthogonally to the guide tracks (8a, 8b) of the control curve (8) on the second actuating element (7).

4. A coupling device in accordance with Claim 3, **characterised in that** in the middle of the rotating movement of the second flap element (3), essentially only the principal apexes (HS1, HS2) of the elliptical cross section of the control pin (6) engage with the guide tracks (8a, 8b) on the control curve (8) on the second actuating element (7) of the coupling device (4).

5. A coupling device in accordance with Claim 1 or 2, **characterised in that** the secondary axes of the elliptical cross section of the control pin (6) are determined in such a way that in the initial and final positions of the flap elements (2, 3) of the flap arrangement (1), the control pin (6) on the first actuating element (5) engages with the guide tracks (8a, 8b) on the control curve (8) on the second actuating element (7) of the coupling device (4).

6. A coupling device in accordance with Claim 1, **characterised in that** the control pin (6) forms an integral part of the first actuating element (5).

7. A coupling device in accordance with Claim 1, **characterised in that** the control curve (8) forms an integral part of the second actuating element (7) of the coupling device (4).

8. A coupling device in accordance with Claim 1, **characterised in that** the lever-like first actuating element (5) of the coupling device (4) is connected rigidly to the first flap element (2) of the flap arrangement (1).

9. A coupling device in accordance with Claim 1, **characterised in that** the lever-like second actuating element (7) of the coupling device (4) is connected rigidly to the second flap element (3) of the flap arrangement (1).

10. A flap arrangement with two flap element (2, 3) positioned essentially orthogonally to one another, **characterised by** the use of a coupling device (4) in accordance with at least one of Claims 1 to 9.

11. A flap arrangement according to Claim 10, **characterised by** its use in a ventilation or air conditioning system, in particular in a car.

## Revendications

1. Dispositif d'accouplement pour un ensemble de volets, qui comporte deux volets (2, 3) dont les axes de pivotement (2', 3') sont disposés sensiblement orthogonalement l'un par rapport à l'autre, ce dispositif d'accouplement (4) permettant de convertir un mouvement de pivotement du premier volet (2) en un mouvement de pivotement du second volet (3) de l'ensemble de volets (1) par le fait qu'une broche de commande (6) d'un premier élément d'actionnement (5) du dispositif d'accouplement, relié au premier volet, s'engage dans une came de commande d'un second élément d'actionnement (7) du dispositif d'accouplement qui est relié au second volet, caractérisé en ce que la broche de commande (6) du premier élément d'actionnement (5) du dispositif d'accouplement (4) comporte, au moins dans sa partie de longueur qui est en prise avec la came de commande (8) du second élément d'actionnement (7) pendant le mouvement de pivotement, une section sensiblement elliptique et constante sur cette partie de longueur.

2. Dispositif d'accouplement pour ensemble de volets selon la revendication 1, caractérisé en ce que l'axe principal de la section elliptique de la broche de commande (6) a une dimension égale au demi-espacement minimal entre deux surfaces de guidage (8a, 8b) mutuellement opposées de la came de commande (8) du second élément d'actionnement (7) du dispositif d'accouplement (4).

3. Dispositif d'accouplement pour ensemble de volets selon la revendication 1 ou 2, caractérisé en ce que, dans une position médiane du mouvement de pivotement du second volet (3), l'axe principal de la section elliptique de la broche de commande (6) du premier élément d'actionnement (5) du dispositif d'accouplement (4) est orienté perpendiculairement aux voies de guidage (8a, 8b) de la came de commande (8) du second élément d'actionnement (7).

4. Dispositif d'accouplement pour ensemble de volets selon la revendication 3, caractérisé en ce que, dans la position médiane du mouvement de pivotement du second volet (3), la section elliptique de la broche de commande (6) est en prise dans l'essentiel, seulement par ses sommets principaux (HS1, HS2) avec les voies de guidage (8a, 8b) de la came de commande (8) du second élément d'actionnement (7) du dispositif d'accouplement (4).

5. Dispositif d'accouplement pour ensemble de volets selon la revendication 1 ou 2, caractérisé en ce que les axes secondaires de la section elliptique de la broche de commande (6) sont définis de telle sorte, que, dans la position initiale et dans la position finale des volets (2, 3) de l'ensemble de volets (1), la broche de commande (6) du premier élément d'actionnement (5) soit en prise avec les voies de guidage (8a, 8b) de la came de commande (8) du second élément d'actionnement (7) du dispositif d'accouplement (4).

6. Dispositif d'accouplement pour ensemble de volets selon la revendication 1, caractérisé en ce que la broche de commande (6) fait partie intégrante du premier élément d'actionnement (5).

7. Dispositif d'accouplement pour ensemble de volets selon la revendication 1, caractérisé en ce que la came de commande (8) fait partie intégrante du second élément d'actionnement (7) du dispositif d'accouplement (4).

8. Dispositif d'accouplement pour ensemble de volets selon la revendication 1, caractérisé en ce que le premier élément d' actionnement (5), agencé en forme de levier, du dispositif d'accouplement (4), est relié solidement au premier volet (2) de l'ensemble de volets (1).

9. Dispositif d'accouplement pour ensemble de volets selon la revendication 1, caractérisé en ce que le second élément d'actionnement (7), agencé en forme de levier, du dispositif d'accouplement (4) est relié solidement au second volet (3) de l'ensemble de volets (1).

10. Ensemble de volets comportant deux volets (2, 3) disposés sensiblement perpendiculairement entre eux, caractérisé par l'utilisation d'un dispositif d'accouplement (4) selon au moins une des revendications 1 à 9.

11. Ensemble de volets, selon la revendication 10, caractérisé par son utilisation dans une installation de ventilation ou de climatisation, notamment d'une automobile.
